# EUROPEAN PATENT SPECIFICATION

(11) **EP 2 247 037 B1**
(45) Date of publication and mention of the grant of the patent: **22.02.2012**
(21) Application number: 08703809.7
(22) Date of filing: 24.01.2008
(51) Int. Cl.: H04L 12/24, H04L 12/56

(54) **Band-guarantee communication system**
Bandgarantie-Kommunikationssystem
Système de communication à bande garantie

(43) Date of publication of application: 03.11.2010
(73) Proprietor: Mitsubishi Electric Corporation, Tokyo 100-8310 (JP)
(72) Inventor: YOKOTANI, Tetsuya, Tokyo 100-8310 (JP); SATO, Koji, Tokyo 100-8310 (JP)
(74) Representative: Hopkin, Tobias J.B.
(86) International application number: PCT/JP2008/050982
(87) International publication number: WO 2009/093322

(56) References cited:
- JP-A- 2003 258 830
- JP-A- 2006 180 292
- US-A1- 2005 099 952
- VARADARAJAN S ET AL: "EtheReal: a host-transparent real-time Fast Ethernet switch", NETWORK PROTOCOLS, 1998. PROCEEDINGS. SIXTH INTERNATIONAL CONFERENCE O N AUSTIN, TX, USA 13-16 OCT. 1998, LOS ALAMITOS, CA, USA,IEEE COMPUT. SOC, US, 13 October 1998 (1998-10-13), pages 12-21, XP010309347, DOI: DOI:10.1109/ICNP.1998.723721 ISBN: 978-0-8186-8988-8
- FEIFEI FENG ET AL: "End-to-end stream establishment in consumer home networks", CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 2, 8 January 2006 (2006-01-08), pages 888-891, XP010893303, DOI: DOI:10.1109/CCNC.2006.1593166 ISBN: 978-1-4244-0085-0
- RAAHEMI B ET AL: "METRO ETHERNET QUALITY OF SERVICES : A framework for quality of services in metro Ethernet networks: the essential functional blocks and handling of packets in the core and at the provider and customer edges", ALCATEL TELECOMMUNICATIONS REVIEW, COMPAGNIE FINANCIÈRE ALCATEL, 54 RUE DE LA BOÉTIE 75008 PARIS, 1 October 2004 (2004-10-01), XP007010175, ISSN: 1267-7167
- Feng F: "Layer 2 subscription protocol considerations", , 1 March 2005 (2005-03-01), pages 1-12, XP002636417, Retrieved from the Internet: URL:http://www.ieee802.org/3/re_study/publ ic/200503/felix_1_0305.pdf [retrieved on 2011-05-11]
- Feng F: "GARP Stream Reservation protocol", , 29 December 2005 (2005-12-29), pages 1-18, XP002636418, Retrieved from the Internet: URL:http://www.ieee802.org/1/files/public/ docs2006/resb-feng-GSRP-v0.3-060104.pdf [retrieved on 2011-05-11]

## Description

### TECHNICAL FIELD

The present invention relates to a bandwidth guaranteed communication system provided with a communication network in which a plurality of devices each terminating an L2 (layer 2) are arranged.

### BACKGROUND ART

In conventional Ethernet (registered trademark), there is no concept about QoS (Quality of Service) control such as bandwidth guaranteeing control, etc., and the conventional Ethernet has been limited to best effort service. However, in recent years, there is a tendency that Ethernet is applied to a carrier network by focusing attention to its economical efficiency, rapidity, etc. In this case, one of those functions which are considered to be necessary is bandwidth guarantee.

However, in the case of Ethernet, there is provided no means of communications for securing or reserving a dynamic bandwidth, so in cases where a bandwidth is to be secured, the bandwidth will be set between switches by means of a fixed bandwidth setting unit. Accordingly, in this case, the bandwidth is secured or reserved irrespective of whether the bandwidth is needed, and hence it can not necessarily be said that such a fixed bandwidth setting is efficient.

In addition, in the case of Ethernet, when the securing or reservation of a bandwidth is carried out in a dynamic manner, it is considered to use a technique called link aggregation (i.e., a method to increase the number of lines connecting between network equipment or devices and to logically treat them as a single thick line in order to aggregate the bandwidth of the lines). In other words, there has been proposed a scheme using a plurality of links by bundling them for a required bandwidth in a link by link manner (see, for example, a first patent document).

On the other hand, in the function of transmitting information over Ethernet in a dynamic manner, OAM (Operation Administration and Maintenance) is specified (see, for example, a first nonpatent document).
However, OAM is a protocol for failure detection and the transmission of maintenance information, so it does not have a function with respect to the securing or reservation of a bandwidth.

First Patent Document: Japanese patent application laid-open No. 2002-232427, pages 1-3, Fig. 1
First Nonpatent Document: ITU-T, Recommendation, Y. 1730 Varadarajan S et al., "EtheReal: a host transparent real-time Fast Ethernet", 13 October 1998, discloses a bandwidth guaranteed communication system provided with a communication network in which a plurality of devices each terminating a layer 2 are arranged, wherein upon bandwidth reservation, a bandwidth reservation request from an end point performing said reservation is made. The further steps resemble the way RSVP functions.

### DISCLOSURE OF THE INVENTION

### PROBLEM TO BE SOLVED BY THE INVENTION

In conventional Ethernet, there is a problem that a bandwidth guaranteed communication system for dynamically securing a bandwidth in a minute unit such as an application on the same link has not yet been achieved.

The present invention has been made in order to solve the problem as referred to above, and has for its object to obtain a bandwidth guaranteed communication system for securing a bandwidth dynamically required for a minute unit such as an application on Ethernet in which the bandwidth will be expected to be made increasingly wider in the future.

### MEANS FOR SOLVING THE PROBLEM

A bandwidth guaranteed communication system according to this invention is one that is provided with a communication network in which a plurality of devices each terminating a layer 2 are arranged, wherein at the time of performing bandwidth reservation, a bandwidth reservation request is made through an Ethernet OAM frame from an end point performing the bandwidth reservation by the use of the Ethernet OAM frame specified by the layer 2; it is determined by an intermediary one among the plurality of devices whether bandwidth reservation can be made; in cases where it is determined that bandwidth reservation can be made, that determination is transmitted to a device in a direction downstream of the intermediary device, so that a determination as to whether bandwidth reservation can be made is performed in a repeated manner; if the most distant one among the plurality of devices is reached, the bandwidth reservation request is returned to the transmitting source, whereby at the time when the bandwidth reservation request is returned to the transmitting device, it is recognized that the bandwidth reservation has been completed and the start of user communication is permitted; and on the other hand, in cases where it is determined by the intermediary device that the bandwidth reservation can not be made, the bandwidth reservation request is returned to the transmitting source at the time of a determination being made that the bandwidth reservation can not be made, so that the application of user communication in a reply path concerned is not permitted.

### EFFECT OF THE INVENTION

According to the present invention, it is possible to secure or guarantee a bandwidth dynamically required for a minute unit such as an application.

### BRIEF DESCRIPTION OF THE DRAWINGS

[Fig. 1] is an explanatory view showing a bandwidth securing or reserving method carried out by a bandwidth guaranteed communication system according to a first embodiment of the present invention. (First Embodiment)
[Fig. 2] is an explanatory view showing the bandwidth securing or reserving method carried out by the bandwidth guaranteed communication system according to the first embodiment of the present invention. (First Embodiment)
[Fig. 3] is an explanatory view schematically showing the configuration of an Ethernet OAM frame used in the bandwidth guaranteed communication system according to the first embodiment of the present invention. (First Embodiment)
[Fig. 4] is an explanatory view showing the schematic configuration of an Ethernet OAM frame in a bandwidth guaranteed communication system according to a second embodiment of the present invention. (Second Embodiment)
[Fig. 5] is an explanatory view showing a combination of processes carried out by a bandwidth guaranteed communication system according to a third embodiment of the present invention. (Third Embodiment)
[Fig. 6] is an explanatory view showing a bandwidth securing or reserving method carried out by a bandwidth guaranteed communication system according to a fourth embodiment of the present invention. (Fourth Embodiment)

### BEST MODE FOR CARRYING OUT THE INVENTION

### (First Embodiment)

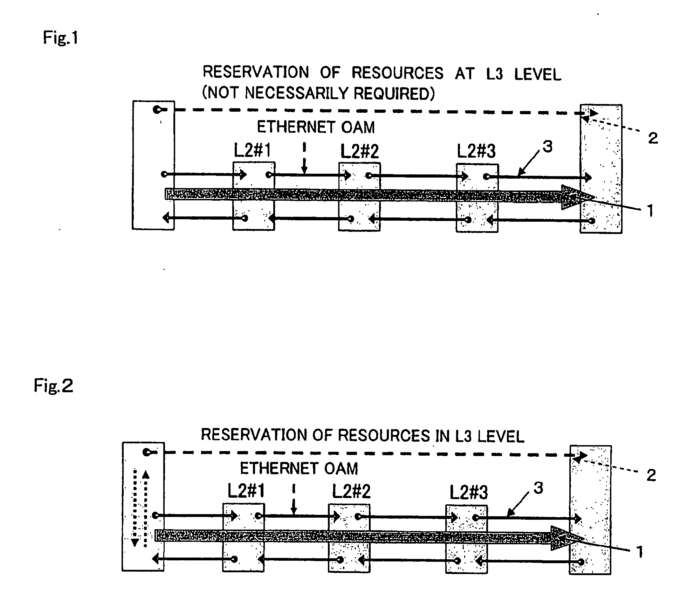

Fig. 1 and Fig. 2 are explanatory views showing a bandwidth securing or reserving method carried out by a bandwidth guaranteed communication system according to a first embodiment of the present invention.
In Fig. 1 and Fig. 2, three L2 (layer 2) devices L2#1, L2#2, L2#3, which together constitute an Ethernet switch, are connected between L3 (layer 3) devices L3#1, L3#2 which together constitute a router.

The flow of user information 1 is performed from the L3 device L3#1 to the L3 device L3#2, and between the L3 device L3#1 and the L3 device L3#2, the securing or reservation of bandwidth may be carried out, as shown in Fig. 2, or the securing or reservation of bandwidth may not be carried out, as shown in Fig. 1. In cases where bandwidth reservation (resource reservation at an L3 level) is carried out, it is performed in a path 2 (see a broken line arrow).

A signal 3 mutually among the L2 devices L2#1 through L2#3 is transmitted through a communication path of Ethernet OAM, and a bandwidth mutually among the L2 devices L2#1 through L2#3 is secured or reserved by the use of the communication path of Ethernet OAM.

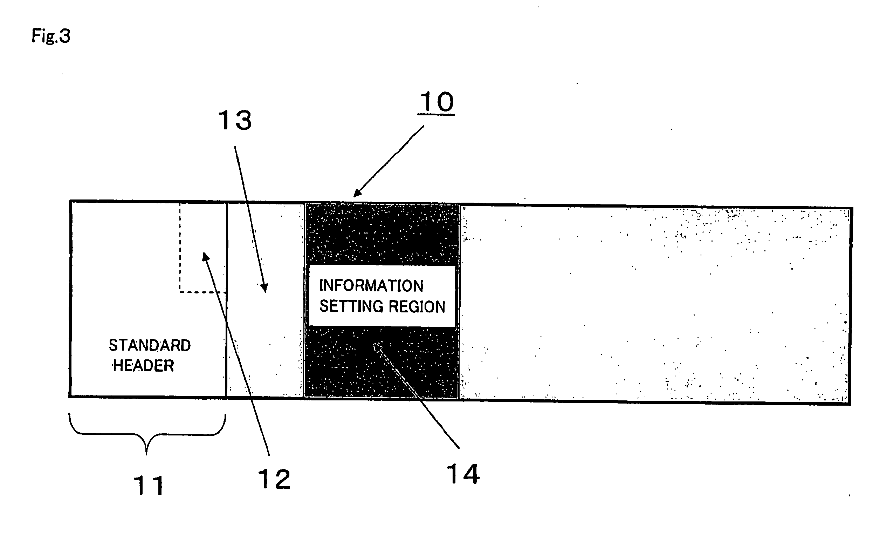

Fig. 3 is an explanatory view schematically showing the configuration of an Ethernet OAM frame used for bandwidth reservation mutually among the L2 devices L2#1 through L2#3.
In Fig. 3, an Ethernet OAM frame 10 is composed of a standard header 11 containing a protocol type 12, an Ethernet OAM type 13, and an information setting region 14. In the information setting region 14, there are set a direction, a bandwidth reservation request, a reply, a required bandwidth, and so on, for example.

In the following, reference will be made to an operation according to the first embodiment of the present invention, while referring to Fig. 1 through Fig. 3.
First of all, the case in which bandwidth reservation in L3 is carried out will be explained by using Fig. 2.
A bandwidth is first reserved or allocated between the L3 device L3#1 and the L3 device L3#2, and bandwidth reservation is then made mutually among the L2 device L2#1 through L2#3.

A method of bandwidth reservation according to SIP (Session Initiation Protocol) or RSVP (Resource Reservation Protocol) is adopted for bandwidth reservation between the L3 device L3#1 and L3#2.

Mutually among the L2 devices L2#1 through L2#3, bandwidth reservation is made by the use of the Ethernet OAM frame 10 (see Fig. 3). The required bandwidth is described in the information setting region 14 of the Ethernet OAM frame 10, and each of the L2 devices L2#1 through L2#3 determines, upon reception of the frame, whether the required bandwidth can be secured or reserved.

In cases where the required bandwidth can be reserved, the signal 3 is transmitted in a downstream direction, and on the other hand, in cases where the required bandwidth can not be reserved, a notification of the fact that "the required bandwidth can not be reserved" is made to an upstream side.

In cases where a message is received from a downstream side that the bandwidth reservation can be made, each of the L2 devices L2#1 through L2#3 recognizes that the bandwidth reservation has been made by all the devices lying downstream thereof, and further transmits that frame to an upstream side.

Each of the L2 devices L2#1 through L2#3 performs the execution of the above-mentioned transmittal processing in a repeated manner.
As a result of this, the L3 device L3#1 located at an end point can know whether the bandwidth reservation in each of the L2 devices L2#1 through L2#3 can be made.
The L3 device L3#1 starts communications with user equipment, in cases where it is recognized that the bandwidth reservation has been made by all the L2 devices L2#1 through L2#3.

However, in cases where it is recognized that the bandwidth reservation can not be made, the fact that the bandwidth reservation can not be made is notified by the use of a protocol specified between the L3 device L3#1 and the L3 device L3#2. and the bandwidth reservation processing mutually between the L3 devices L3#1 and L3#2 is canceled or stopped, and it is notified to the user that the bandwidth reservation is impossible.

Next, reference will be made to the case in which bandwidth reservation is not made between the L3 devices L3#1 and L3#2, i.e., the case in which bandwidth reservations are made between the L3 devices L3#1 and L3#2 and between the L2 devices L2#1 and L2#2, independently of each other, by the use of Fig. 1.

In this case, if the L3 device L3#1 located at an end point receives a communication request from a user, it outputs an Ethernet OAM frame 10 for bandwidth reservation at that time.
Hereinafter, bandwidth reservations mutually among the L2 devices L2#1 through L2#3 are made similar to the above.

As described above, according to the first embodiment (Fig. 1 through Fig. 3) of the present invention, in the bandwidth guaranteed communication system provided with the communication network in which the plurality of devices L3#1, L2#1 through L2#3, and L3#2 each terminating an L2 (layer 2) are arranged, when bandwidth reservation is made, a bandwidth reservation request is made through an Ethernet OAM frame 10 from an end point (L3#1) performing the bandwidth reservation, by the use of the Ethernet OAM frame 10 specified by the L2, and it is determined by an intermediary one among the plurality of devices whether the bandwidth reservation can be made.

Then, in cases where the intermediary device makes a determination that the bandwidth reservation can be made, that determination is transmitted to a device in a direction downstream of the intermediary device, and hereafter, a determination as to whether the bandwidth reservation can be made is performed in a repeated manner. If the most distant one (L3#2) among the plurality of devices is reached, the bandwidth reservation request will be returned to a transmitting source, and at the time when the bandwidth reservation request is returned to the transmitting source, it is recognized that the bandwidth reservation has been completed and the start of user communication is permitted.

On the other hand, in cases where it is determined by the intermediary device that the bandwidth reservation can not be made, the bandwidth reservation request is returned to the transmitting source at the time of a determination being made that the bandwidth reservation can not be made, the application of user communication in a reply path concerned is not permitted.
As a result of this, it is possible to obtain a bandwidth guaranteed communication system for securing or reserving a bandwidth dynamically required for a minute unit such as an application.

### (Second Embodiment)

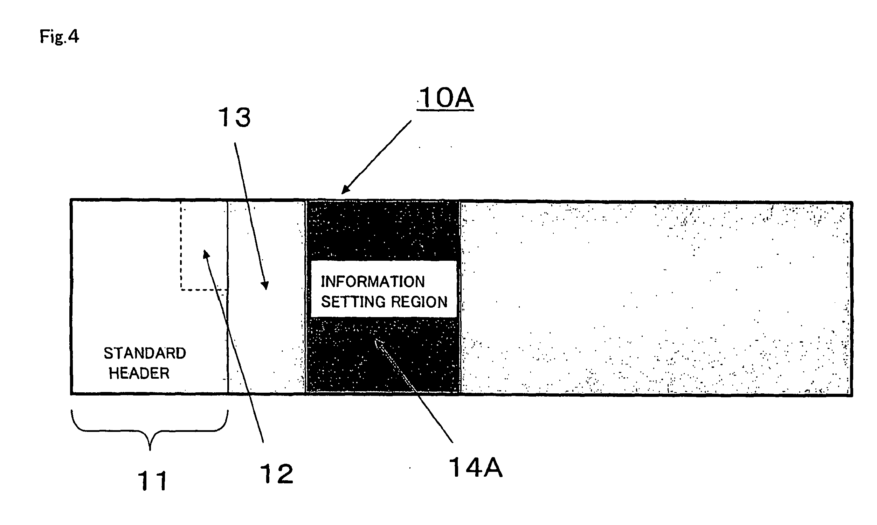

In the above-mentioned first embodiment (Fig. 3), the information setting region 14 in which a direction, a bandwidth reservation request, a reply and a required bandwidth are set is formed in the Ethernet OAM frame 10, but as shown in Fig. 4, in an Ethernet OAM frame 10A, there may be formed an information setting region 14A in which not only a direction, a bandwidth reservation request, a reply and a required bandwidth but also a policy and a secured or reserved region are set.

Fig. 4 is an explanatory view showing the schematic configuration of the Ethernet OAM frame 10A according to the second embodiment of the present invention, wherein those components which are similar to the above-mentioned ones (see Fig. 3) are denoted by the same reference numerals and characters as those in the above-mentioned embodiment, or with "A" being attached to reference numerals, and a detailed description thereof is omitted.
In Fig. 4, the information setting region 14A in which a policy is described is formed in the Ethernet OAM frame 10A by which bandwidth reservation is made.

In other words, in the above-mentioned first embodiment (Fig. 3), only the required bandwidth is described, but in contrast to this, in the second embodiment (Fig. 4), a policy at the time when a bandwidth can not be secured or reserved is described in the information setting region 14A.

The following three kinds of policies P1 through P3 are recited as such a policy.
In policy P1, in cases where bandwidth reservation can not be made, communication is refused (user communication is not started).
In policy P2, in cases where bandwidth reservation can not be made, communication is carried out only in a securable or reservable bandwidth.
In policy P3, in cases where bandwidth reservation can not be made, communication is carried out as a best effort service.

In the following, more specific reference will be made to an operation in the case of each of policies P1 through P3.
First, in the case of the policy P1, when making a bandwidth reservation request, "the policy P1" is described or written in an item of "policy" in the information setting region 14A in the Ethernet OAM frame 10A.
In cases where the required bandwidth can not be secured or reserved, the L2 devices L2#1 through L2#3 to be relayed write "reservation impossible" in an item of "reply" in the information setting region 14A, and the Ethernet OAM frame is returned to a transmitting side. As a result of this, communication processing of that communication is refused.

Next, in the case of the policy P2, "the policy P2" is written in the item of "policy" in the information setting region 14A. In this case, even in cases where the required bandwidth can not be secured or reserved, a maximum bandwidth currently securable or reservable is obtained.
In addition, the bandwidth is written in an item of "secured or reserved bandwidth" in the information setting region 14A, and the Ethernet OAM frame is transmitted to the downstream side. After this, based on the value of the secured or reserved bandwidth set here, the L2 devices L2#1 through L2#3 located at the downstream side try to secure or reserve the bandwidth.

Finally, in the case of the policy P3, "the policy P3" is written in the item of "policy" in the information setting region 14A.
In cases where the required bandwidth can not be obtained, the L2 devices L2#1 through L2#3 set the item of "secured or reserved bandwidth" in the information setting region 14A of the frame to "0", and transmit it in a downstream direction. As a result of this, the bandwidth for that communication is not guaranteed, but the communication itself is permitted, so it becomes possible to provide the communication in best effort service.

As described above, according to the second embodiment (Fig. 4 ) of the present invention,
in the information setting region 14A of the Ethernet OAM frame 10A, a policy related to the acceptance or rejection determination of a bandwidth reservation is set, and in cases where it is determined that the bandwidth reservation is impossible, various communication modes can be achieved according to the policy, the communication modes including a first communication mode for establishing a connection to a possible bandwidth even if the reserved or guaranteed bandwidth is reduced, and a second communication mode for establishing a connection as best effort communication without providing bandwidth guarantee.
As a result of this, it is further possible to obtain a bandwidth guaranteed communication system for securing or reserving a bandwidth dynamically required for a minute unit such as an application.

### (Third Embodiment)

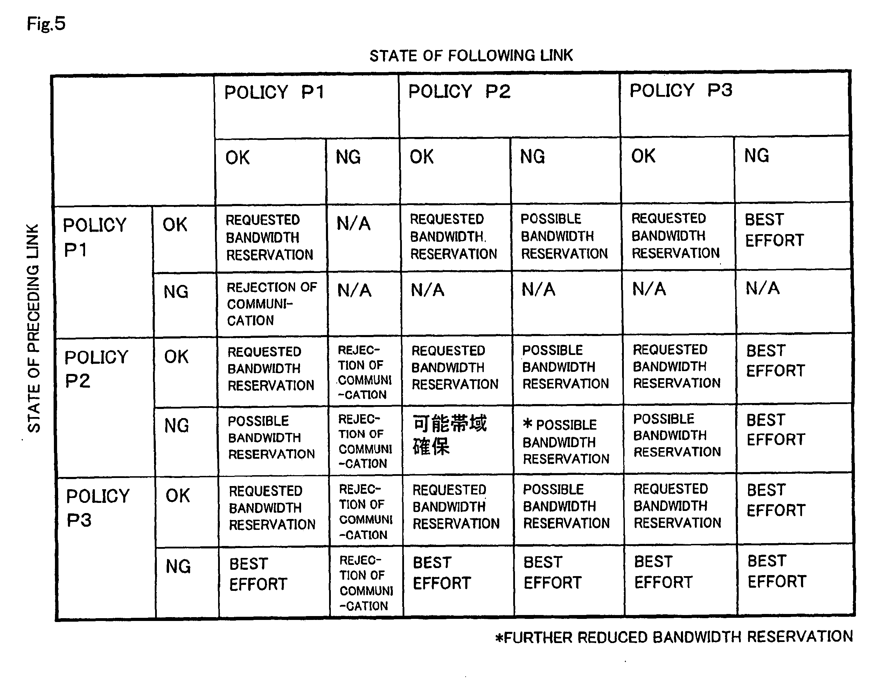

Although in the above-mentioned second embodiment, no particular reference has been made, each of the L2 device and the L3 device can change the processing of the policies P1 through P3 each for between links which they have (for example, see Fig. 5).

Fig. 5 is an explanatory view showing a combination of processes according to a third embodiment of the present invention. In Fig. 5, the combination of processes in the L2 device and the L3 device is changed into a requested bandwidth reservation, a possible bandwidth reservation, a communication refusal, a best effort, or N/A (Not Applicable), in accordance with each state (OK or NG) of a preceding or forward link (in the vertical direction in Fig. 5) and a following or backward link (in the horizontal direction in Fig. 5).

As described above, according to the third embodiment of the present invention, policies are independently set in the preceding link and the following link of each of a plurality of devices, respectively, and in a device corresponding to a change over point of the policies, a control mode is determined according to a combination table (Fig. 5) for the policies of both the preceding link and the following link.
As a result of this, it is further possible to obtain a bandwidth guaranteed communication system for securing or reserving a bandwidth dynamically required for a minute unit such as an application.

### (Fourth Embodiment)

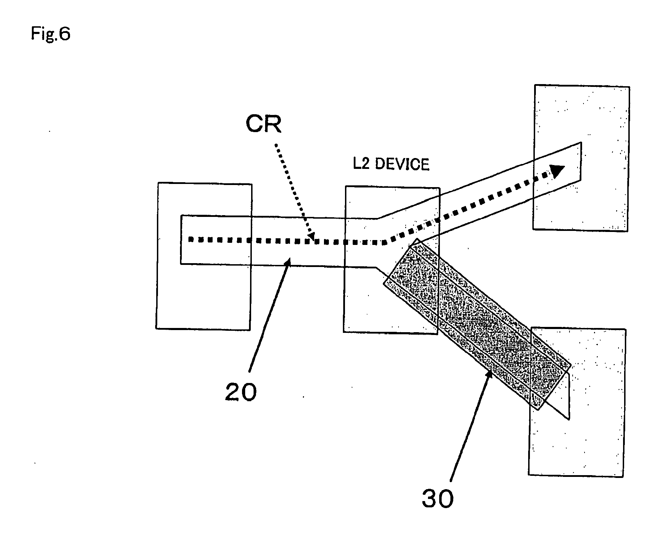

Although no particular mention has been made in the above-mentioned first through third embodiments, a flooding phenomenon in the case of a multipoint being formed in an L2 device can be dealt with, as shown in Fig. 6.
Fig. 6 is an explanatory view showing a bandwidth securing or reserving method carried out by a bandwidth guaranteed communication system according to a fourth embodiment of the present invention, wherein an operation of the system in the case of a multipoint being formed in an L2 device is shown.

In the L2 device, it is considered that when flooding is generated and an Ethernet OAM frame is received, there occurs a phenomenon in which a transmission path can not be determined and transmission to all the possible directional paths can be made. Hereinafter, such a flooding phenomenon will be explained while referring to Fig. 6.

In Fig. 6, a directional path 20 is one with its bandwidth obtained or reserved by Ethernet OAM, and is branched into two directional paths in the L2 device.
An actual communication CR is performed toward one directional path, as shown by a broken line arrow, and the other directional path, though obtained, becomes an unused or wasted bandwidth 30.
In Fig. 6, there is illustrated the case in which flooding is generated in the L2 device, and only the one directional path is used for the actual communication CR in a state where bandwidths have been secured or obtained for the two directional paths.

Next, reference will be made to an operation according to this fourth embodiment of the present invention.
In cases where bandwidths are obtained by a plurality of directional paths, as shown in Fig. 6, the bandwidth of a directional path is compulsorily opened to other users when user communication on that direction path has not been started within a fixed period of time (i.e., no frame for user communication has been received).
Also, in cases where the registration of a MAC (Media Access Control) address, etc., is made and flooding is finished, compulsive opening of the bandwidth of an unused directional path is carried out. In other words, a bandwidth reservation request is transmitted to that directional path by using an Ethernet OAM frame at the time.

As described above, according to the fourth embodiment of the present invention, a plurality of directional paths are connected to the preceding links of a plurality of devices, wherein in cases where flooding occurs, the bandwidth of a directional path in which the flooding has ended, or the bandwidth of a directional path in which user communication has not been performed over a fixed period of time from the start of a plurality of flooding, is opened to other users, and a bandwidth reservation request is transmitted through an Ethernet OAM frame in a downstream direction from the opened directional path.
As a result of this, it is possible to obtain a bandwidth guaranteed communication system for securing or reserving a bandwidth dynamically required for a minute unit such as an application even at the time of the occurrence of flooding.

### (Fifth Embodiment)

Here, note that in the above-mentioned first through fourth embodiments, the description has been made by focusing on performing bandwidth reservation by means of a bandwidth reservation request, but the present invention can be applied to other uses.
For example, a bandwidth can be secured or reserved in each point of view by writing the following values into an information setting region in an Ethernet OAM frame defined as in Fig. 3 and Fig. 4.

That is, it is possible to issue a reservation or acquisition request with respect to each item such as an accumulated delay time, a delay time for each device, an accumulated rejection rate, a rejection rate for each device, an accumulated fluctuation time, a fluctuation time for each device, etc., specified by ITU-T, Y 1541 as IPQoS (IP Quality of Service).

As described above, according to the fifth embodiment of the present invention, by making the notice of acceptance or rejection of a reservation for at least one item among an accumulated delay request, a device passage delay request, an accumulated rejection rate request, a device passage rejection rate request, an accumulated fluctuation request, and a device passage fluctuation request, in addition to a bandwidth reservation request, it is further possible to obtain a bandwidth guaranteed communication system for securing or reserving a bandwidth dynamically required for a minute unit such as an application.

## Claims

1. A bandwidth guaranteed communication system provided with a communication network in which a plurality of devices (L2#1 through L"#3) each terminating a layer 2 are arranged, said system comprising:
making, upon bandwidth reservation, a bandwidth reservation request through an Ethernet OAM frame (10) from an end point performing said bandwidth reservation by the use of said Ethernet OAM frame (10) specified by said layer 2;
making a determination, by an intermediary one among said plurality of devices (L2#1 through L"#3), as to whether said bandwidth reservation can be made;
transmitting, in cases where it is determined that said bandwidth reservation can be made, that determination to a device in a direction downstream of said intermediary device;
performing, hereafter in a repeated manner, a determination as to whether said bandwidth reservation can be made, and returning said bandwidth reservation request to a transmitting source if said bandwidth reservation request reaches the most distant one of said plurality of devices (L2#1 through L"#3);
permitting the start of user communication by recognizing that said bandwidth reservation has been completed at the time when said bandwidth reservation request is returned to said transmitting source; and
on the other hand, in cases where it is determined by said intermediary device that said bandwidth reservation can not be made, returning said bandwidth reservation request to said transmitting source at the time of a determination being made that said bandwidth reservation can not be made, whereby the application of user communication in a reply path concerned is not permitted.

2. The bandwidth guaranteed communication system as set forth in claim 1, **characterized by** comprising:
setting a policy (P1 through P3) related to an acceptance or rejection determination of said bandwidth reservation; and
achieving various communication modes according to said policy in cases where it is determined that said bandwidth reservation can not be made, said modes including a first communication mode for establishing a connection even if the reserved bandwidth is reduced, and a second communication mode for establishing a connection as best effort communication without providing any bandwidth reservation at all.

3. The bandwidth guaranteed communication system as set forth in claim 2, **characterized by** comprising:
setting said policy (L2#1 through L"#3) for each of a preceding link and a following link of each of said plurality of devices (L2#1 through L"#3), separately from each other; and
determining a control mode according to a combination table of policies (P1 through P3) of both of said preceding link and said following link in a device corresponding to a change over point of said policy (L2#1 through L"#3).

4. The bandwidth reservation communication system as set forth in any one of claims 1 through 3, **characterized in that**
a plurality of directional paths (20) are connected to preceding links of said plurality of devices;
in cases where flooding occurs, the bandwidth of a directional path in which said flooding has ended, or the bandwidth of a directional path in which user communication has not been performed over a fixed period of time from the start of said plurality of flooding, is opened; and
said bandwidth reservation request is transmitted through said Ethernet OAM frame (10) in a downstream direction from said opened directional path.

5. The bandwidth reservation communication system as set forth in any one of claims 1 through 4, **characterized by** comprising:
making a notice of acceptance or rejection of a reservation for at least one of an accumulated delay request, a device passage delay request, an accumulated rejection rate request, a device passage rejection rate request, an accumulated fluctuation request, and a device passage fluctuation request, in addition to said bandwidth reservation request.

## Patentansprüche

1. Kommunikationssystem mit Bandbreitengarantie, das mit einem Kommunikationsnetz versehen ist, in welchem mehrere Vorrichtungen (L2#1 bis L"#3), die jeweils eine Schicht 2 beenden, angeordnet sind, welches System aufweist:
Durchführen, auf eine Bandbreitenreservierung hin, einer Bandbreiten-Reservierungsanforderung durch einen Ethernet-OAM-Rahmen (10) von einem Endpunkt aus, der die Bandbreitenreservierung durch die Verwendung des Ethernet-OAM-Rahmens (10), der durch die Schicht 2 spezifiziert ist, durchführt;
Durchführen einer Bestimmung, durch eine dazwischen liegendes der mehreren Vorrichtungen (L2#1 bis L"#3), ob die Bandbreitenreservierung durchgeführt werden kann;
Übertragen in den Fällen, in denen bestimmt wurde, dass die Bandbreitenreservierung durchgeführt werden kann, dieser Bestimmung zu einer Vorrichtung in einer Richtung stromabwärts der dazwischen liegenden Vorrichtung;
nachfolgendes wiederholtes Durchführen einer Bestimmung, ob die Bandbreitenreservierung durchgeführt werden kann, und Zurückführen der Bandbreiten-Reservierungsanforderung zu einer Übertragungsquelle, wenn die Bandbreiten-Reservierungsanforderung die entfernteste der mehreren Vorrichtungen (L2#1 bis L2"#3) erreicht;
Ermöglichen des Starts der Benutzerkommunikation durch Erkennen, dass die Bandbreitenreservierung zu der zeit beendet wurde, zu der die Bandbreiten-Reservierungsanforderung zu der Übertragungsquelle zurückgeführt wird; und
andererseits in den Fällen, in denen durch die dazwischen liegende Vorrichtung bestimmt wurde, dass die Bandbreitenreservierung nicht durchgeführt werden kann, Zurückführen der Bandbreiten-Reservierungsanforderung zu der Übertragungsquelle zu der Zeit der Durchführung einer Bestimmung, dass die Bandbreitenreservierung nicht durchgeführt werden kann, wodurch die Anwendung einer Benutzerkommunikation in einem betroffenen Antwortpfad nicht zugelassen wird.

2. Kommunikationssystem mit Bandbreitengarantie nach Anspruch 1, **dadurch gekennzeichnet, dass** es aufweist:
Setzen einer Verfahrensweise (P1 bis P3), die auf die Bestimmung einer Annahme oder Zurückweisung der Bandbreitenreservierung bezogen ist; und
Erzielen verschiedener Kommunikationsmoden gemäß der Verfahrensweise in den Fällen, in denen bestimmt ist, dass die Bandbreitenreservierung nicht durchgeführt werden kann, welche Moden einen ersten Kommunikationsmodus zum Herstellen einer Verbindung, selbst wenn die reservierte Bandbreite reduziert ist, und einen zweiten Kornmunikationsmodus zum Herstellen einer Verbindung als Kommunikation mit dem besten Bemühen ohne Vorsehen irgendeiner Bandbreitenreservierung enthalten.

3. Kommunikationssystem mit Bandbreitengarantie nach Anspruch 2, **dadurch gekennzeichnet, dass** es aufweist:
Setzen der Verfahrensweise (L2#1 bis L"#3) für jede von einer vorhergehenden Verbindung und einer nachfolgenden Verbindung von jeder der mehreren Vorrichtungen (L2#1 bis L"#3), getrennt voneinander; und
Bestimmen eines Steuermodus gemäß einer Kombinationstabelle von Verfahrensweisen (P1 bis P3) sowohl von der vorhergehenden Verbindung als auch von der folgenden Verbindung in einer Vorrichtung entsprechend einem Änderungspunkt dieser Verfahrensweise (L2#1 bis L"#3).

4. Kommunikationssystem mit Bandbreitenreservierung nach einem der Ansprüche 1 bis 3, **dadurch gekennzeichnet, dass**
mehrere Richtungspfade (20) mit vorhergehenden Verbindungen der mehreren Vorrichtungen verbunden sind;
in den Fällen, in denen eine Überflutung stattfindet, die Bandbreite eines Richtungspfads, in welchem die Überflutung geendet hat, oder die Bandbreite eines Richtungspfads, in welchem eine Benutzerkommunikation während einer festen Zeitperiode von dem Beginn der mehrfachen Überflutungen nicht durchgeführt wurde, geöffnet wird; und
die Bandbreiten-Reservierungsanforderung durch den Ethernet-OAM-Rahmen (10) in einer Stromabwärtsrichtung von dem geöffneten Richtungspfad aus übertragen wird.

5. Kommunikationssystem mit Bandbreitenreservierung nach einem der Ansprüche 1 bis 4, **dadurch gekennzeichnet, dass** es aufweist:
Durchführen einer Mitteilung der Annahme oder Zurückweisung einer Reservierung für zumindest eine von einer akkumulierten Verzögerungsanforderung, einer Vorrichtungsdurchgangs-Verzögerungsanforderung, einer akkumulierten Zurückweisungsratenanforderung, einer Vorrichtungsdurchgangs-Zurückweisungsratenanforderung, einer akkumulierten Fluktuationsanforderung und einer Vorrichtungsdurchgangs-Fluktuationsanforderung zusätzlich zu der Bandbreiten-Reservierungsanforderung.

## Revendications

1. Système de communication à largeur de bande garantie doté d'un réseau de communication dans lequel sont agencés une pluralité de dispositifs (L2#1 à L"#3), chacun d'eux terminant une couche 2, ledit système comprenant les étapes consistant à :
effectuer, lors d'une réservation de largeur de bande, une demande de réservation de largeur de bande par l'intermédiaire d'une trame OAM Ethernet (10) à partir d'un point d'extrémité qui exécute ladite réservation de largeur de bande à l'aide de ladite trame OAM Ethernet (10) spécifiée par ladite couche 2 ;
effectuer une détermination, à l'aide d'un dispositif intermédiaire parmi ladite pluralité de dispositifs (L2#1 à L"#3), qui permet de savoir si ladite réservation de largeur de bande peut être effectuée ;
transmettre, dans les cas où on détermine que ladite réservation de largeur de bande peut être effectuée, cette détermination à un dispositif dans une direction en aval dudit dispositif intermédiaire ;
exécuter, ci-après d'une façon répétée, ladite détermination qui permet de savoir si ladite réservation de largeur de bande peut être effectuée, et renvoyer ladite demande de réservation de largeur de bande à une source de transmission si ladite demande de réservation de largeur de bande atteint le dispositif le plus éloigné de ladite pluralité de dispositifs (L2#1 à L"#3) ;
permettre le début d'une communication d'utilisateur en reconnaissant que ladite réservation de largeur de bande a été achevée au moment où ladite demande de réservation de largeur de bande est renvoyée à ladite source de transmission ; et
et d'autre part, dans les cas où on détermine grâce audit dispositif intermédiaire que ladite réservation de largeur de bande ne peut pas être effectuée, renvoyer ladite demande de réservation de largeur de bande à ladite source de transmission au moment où l'on effectue une détermination selon laquelle ladite réservation de largeur de bande ne peut pas être effectuée, grâce à quoi l'application d'une communication d'utilisateur dans un chemin de réponse concerné n'est pas permise.

2. Système de communication à largeur de bande garantie selon la revendication 1, **caractérisé par le fait qu'**il comprend les étapes consistant à :
établir une politique (P1 à P3) associée à une détermination d'acceptation ou de rejet de ladite réservation de largeur de bande ; et
réaliser divers modes de communication selon ladite politique dans les cas où l'on détermine que ladite réservation de largeur de bande ne peut pas être effectuée, lesdits modes comprenant un premier mode de communication destiné à établir une connexion même si la largeur de bande réservée est réduite, et un deuxième mode de communication destiné à établir une connexion en tant que communication de service au mieux sans fournir aucunement une quelconque réservation de largeur de bande.

3. Système de communication à largeur de bande garantie selon la revendication 2, **caractérisé par le fait qu'**il comprend les étapes consistant à :
établir ladite politique (L2#1 à L"#3) pour chacune d'une liaison précédente et d'une liaison suivante de chaque dispositif de ladite pluralité de dispositifs (L2#1 à L"#3), séparément l'une de l'autre ; et
déterminer un mode de commande selon une table de combinaison des politiques (P1 à P3) de ladite liaison précédente et de ladite liaison suivante dans un dispositif qui correspond à un point de changement de ladite politique (L2#1 à L"#3).

4. Système de communication à réservation de largeur de bande selon l'une quelconque des revendications 1 à 3, **caractérisé en ce que** :
une pluralité de chemins directionnels (20) sont connectées aux liaisons précédentes de ladite pluralité de dispositifs ;
dans les cas où une inondation se produit, la largeur de bande d'un chemin directionnel dans lequel ladite inondation a pris fin, ou la largeur de bande d'un chemin directionnel dans lequel une communication d'utilisateur n'a pas été exécutée au cours d'une période de temps fixe à partir du début de ladite pluralité d'inondations, est ouverte ; et
ladite demande de réservation de largeur de bande est transmise par l'intermédiaire de ladite trame OAM Ethernet (10) dans une direction en aval à partir dudit chemin directionnel ouvert.

5. Système de communication à réservation de largeur de bande selon l'une quelconque des revendications 1 à 4, **caractérisé par le fait qu'**il comprend une étape consistant à :
procéder à une notification de l'acceptation ou du rejet d'une réservation pour l'une au moins d'une demande de retard accumulé, d'une demande de retard de passage de dispositif, d'une demande de taux de rejet accumulé, d'une demande de taux de rejet de passage de dispositif, d'une demande de fluctuation accumulée, et d'une demande de fluctuation de passage de dispositif, en plus de ladite demande de réservation de largeur de bande.
